# EUROPÄISCHE PATENTANMELDUNG

(11) **EP 2 975 308 A1**
(43) Veröffentlichungstag der Anmeldung: **20.01.2016**
(21) Anmeldenummer: 14177572.6
(22) Anmeldetag: 18.07.2014
(51) Int. Cl.: F16K 37/00

(54) **Anordnung für ein Ventil**

(71) Anmelder: Möhlenhoff GmbH, 38229 Salzgitter (DE)
(72) Erfinder: Neujahr, Marc, 31246 Lahstedt (DE)
(74) Vertreter: Döring, Roger

(57) **Zusammenfassung**

Es wird eine Anordnung für ein Ventil (2) angegeben, das mit einem unter der Wirkung einer Ventilfeder stehenden Stößel (4) ausgerüstet ist, bei welcher ein einen Arbeitskolben (11) aufweisendes Stellelement (8) eingesetzt ist, dessen Arbeitskolben in Arbeitsstellung auf den Stößel des Ventils einwirkt und in Achsrichtung desselben verstellbar ist. Es ist außerdem ein Prozessor vorhanden, in dem eine zur Einstellung der Stellung des Stößels des Ventils dienende Regelkennlinie gespeichert ist. Weiterhin ist eine die Stellung des Stößels erkennende Sensorik eingesetzt, welche ein der jeweiligen Stellung des Stößels entsprechendes Sensorsignal an den Prozessor liefert. Der Prozessor ist über einen Rückkanal mit einer Überwachungseinheit verbunden, welcher vom Prozessor das von der Istposition des Stößels des Ventils abhängige Sensorsignal der Sensorik zugeführt wird.

## Beschreibung

Die Erfindung bezieht sich auf eine Anordnung für ein Ventil, das mit einem unter der Wirkung einer Ventilfeder stehenden Stößel ausgerüstet ist, bei welcher ein einen Arbeitskolben aufweisendes Stellelement eingesetzt ist, dessen Arbeitskolben in Arbeitsstellung auf den Stößel des Ventils einwirkt und in Achsrichtung desselben verstellbar ist, bei welcher außerdem ein Prozessor vorhanden ist, in dem eine zur Einstellung der Stellung des Stößels des Ventils dienende Regelkennlinie gespeichert ist, und bei welcher weiterhin eine die Stellung des Stößels erkennende Sensorik eingesetzt ist, welche ein der jeweiligen Stellung des Stößels entsprechendes Sensorsignal an den Prozessor liefert (DE 10 2011 012 908 A1).

Ventile, bei denen die Anordnung nach der Erfindung einsetzbar ist, werden beispielsweise in der Heizungs- und Lüftungstechnik verwendet. Sie können grundsätzlich überall dort verwendet werden, wo durch ein Ventil eine Verstellbewegung durchgeführt werden soll. Es können dadurch beispielsweise Klappen bewegt oder lichte Rohrquerschnitte verändert werden, wodurch auch die Menge eines durch ein entsprechendes Rohrsystem strömenden bzw. fließenden Mediums verändert werden kann. Ein solches Medium ist beispielsweise Wasser oder Luft.

In heute bekannter Technik wird der Stößel eines Ventils vorzugsweise durch Stellelemente bewegt, die mittels elektrischen Stroms aktiviert werden. Ein entsprechendes Stellelement ist beispielsweise mit einem einen Arbeitskolben aufweisenden, temperaturabhängigen Dehnkörper ausgerüstet, an dem ein elektrischer Widerstand als Heizelement angebracht ist. Ein beispielsweise von einem Thermostat geliefertes Signal bewirkt, daß der Widerstand mit Strom versorgt wird. Durch die dann erzeugte Wärme wird der Arbeitskolben des Dehnkörpers verstellt. Der Stößel eines in Ruhestellung beispielsweise geschlossenen Ventils wird dadurch entlastet und durch seine Ventilfeder in Richtung "Öffnung des Ventils" bewegt. Eine solche Anordnung geht beispielsweise aus der DE 31 40 472 C2 hervor. Als Stellelement kann aber beispielsweise auch ein Elektromotor eingesetzt werden.

Der maximal mögliche Hub des Arbeitskolbens bekannter temperaturabhängiger Dehnkörper bzw. Stellelemente ist größer als der Weg, den der Stößel eines Ventils zwischen seiner Schließstellung einerseits und seiner Offenstellung andererseits zurücklegt. Durch die DE 199 10 750 A1 ist eine Anordnung bekannt, durch welche die Bewegung des Arbeitskolbens eines mittels eines elektrischen Heizelements zu erwärmenden Dehnkörpers auf einen maximalen Hub begrenzt wird. An den Dehnkörper dieser Anordnung ist eine mit einem Mikroprozessor in Verbindung stehende Meßeinrichtung angeschlossen, die von der Position des Arbeitskolbens des Dehnkörpers abhängige elektrische Spannungswerte an den Mikroprozessor liefert. Aus diesen Spannungswerten wird vom Mikroprozessor eine zwischen einer der Schließstellung des Ventils entsprechenden minimalen Spannung und einer einem vorgegebenen, maximalen Hub des Stößels entsprechenden maximalen Spannung liegende Regelstrecke gebildet und gespeichert. Um ein vollständiges Öffnen des Ventils mit Sicherheit zu erreichen, wird der maximale Hub des Arbeitskolbens des Dehnkörpers größer gewählt als der für den Stößel des Ventils benötigte maximale Hub desselben. Das hat zur Folge, daß der Stellweg der über die elektrische Spannung eingestellt wird, immer noch größer ist, als der Weg, den der Stößel des Ventils zwischen dessen Offenstellung und dessen Schließstellung zurücklegt. Der Dehnkörper wird bis zum Erreichen des maximalen Hubs des Arbeitskolbens mit entsprechendem Energieaufwand erwärmt.

Die eingangs erwähnte DE 10 2011 012 908 A1 beschreibt eine Anordnung zur Einstellung eines Ventils, das mit einem unter der Wirkung einer Ventilfeder stehenden Stößel ausgerüstet ist. Die Anordnung weist in Arbeitsposition einen mit dem Ventil verbundenen Halter auf, an dem ein Stellelement angeordnet ist, das einen in Achsrichtung des Stößels des Ventils verstellbaren Arbeitskolben hat, durch dessen axiale Bewegung der Stößel zwischen einer Offenstellung und einer Schließstellung des Ventils verstellbar ist. Zwischen dem Arbeitskolben des Stellelements und dem Stößel des Ventils ist ein am bzw. im Halter geführtes, in Achsrichtung des Stößels bewegbares, mechanisch stabiles Zwischenstück angeordnet, das ständig am Stößel anliegt und das mit einem Teil einer den Weg des Zwischenstücks, welchen dasselbe entsprechend der Bewegung des Stößels zwischen der Offenstellung und der Schließstellung des Ventils zurücklegt, erfassenden zweiteiligen Sensorik ausgerüstet ist, deren anderer Teil ortsfest am Halter der Anordnung angebracht ist. Bei dieser Anordnung wird mittels des Zwischenstücks nur der Weg des Stößels des Ventils als maximale Wegstrecke erfaßt, den derselbe als maximaler Hub zwischen der Offenstellung und der Schließstellung des Ventils zurücklegt.

Der Erfindung liegt die Aufgabe zugrunde, die eingangs geschilderte Anordnung so weiterzubilden, daß das von der Sensorik gelieferte Signal zur Ermittlung der tatsächlichen jeweiligen Position des Stößels des Ventils ausgewertet werden kann.

Diese Aufgabe wird gemäß der Erfindung dadurch gelöst, daß der Prozessor über einen Rückkanal mit einer Überwachungseinheit verbunden ist, welcher vom Prozessor das von der Istposition des Stößels des Ventils abhängige Sensorsignal der Sensorik zugeführt wird.

Für diese Anordnung wird mit Vorteil mit einem stetigen 0-10 V-Signal gearbeitet, welches in der Gebäudeleittechnik und in der Automationstechnik als Standard gilt. Bei Einsatz der Anordnung wird das der jeweiligen Istposition des Stößels entsprechende Sensorsignal der Sensorik nicht nur dem Prozessor, sondern auch einer Überwachungseinheit zugeführt. Es kann in der Überwachungseinheit angezeigt und ausgewertet werden. So kann beispielsweise direkt erkannt werden, ob das Stellelement der Anordnung noch einwandfrei arbeitet oder ob der Stößel des Ventils nicht die Stellung einnimmt, welche entsprechend der Regelkennlinie des Prozessors von demselben vorgegeben ist. Das wird auf einfache Weise über das Sensorsignal erreicht, das nach jedem vom Prozessor entsprechend seiner Regelkennlinie erzeugten und dem Stellelement aufgegebenen neuen Signal einen geänderten Wert haben muß. Wenn dieser Wert sich trotz eines wiederholten Signals des Prozessors nicht ändert, liegt eine Störung im Betrieb der Anordnung vor. Das wird in der Überwachungseinheit erkannt. Es kann auch zum Auslösen eines Alarms führen.

Ein Ausführungsbeispiel des Erfindungsgegenstandes ist in den Zeichnungen dargestellt.

Es zeigen:
Fig. 1 in schematischer Darstellung eine an einem Ventil angebrachte Anordnung nach der Erfindung.
Fig. 2 und 3 Schnitte durch die Anordnung nach Fig. 1 in unterschiedlichen Positionen.
Fig. 4 eine Schaltungsanordnung für den Betrieb der Anordnung nach Fig. 2 bzw. Fig. 3.

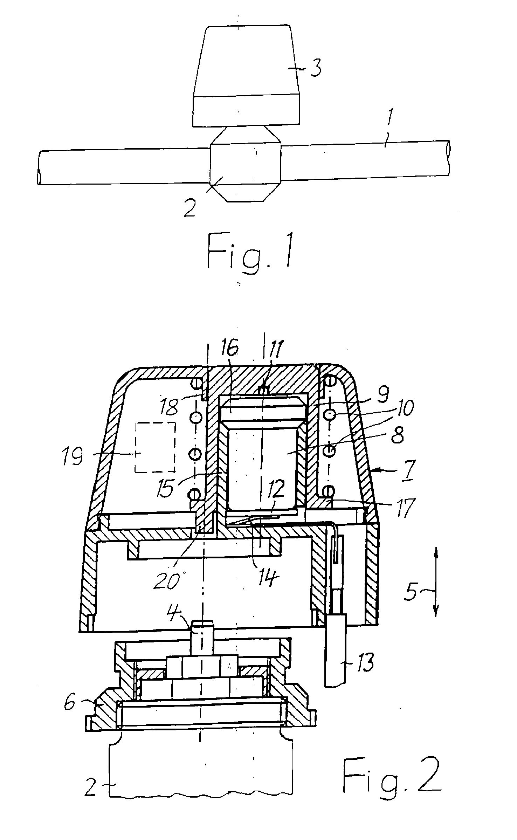

In den Fig. 1, 2 und 3 ist eine grundsätzlich im Sinne der Erfindung verwendbare Anordnung schematisch und als reines Ausführungsbeispiel dargestellt.

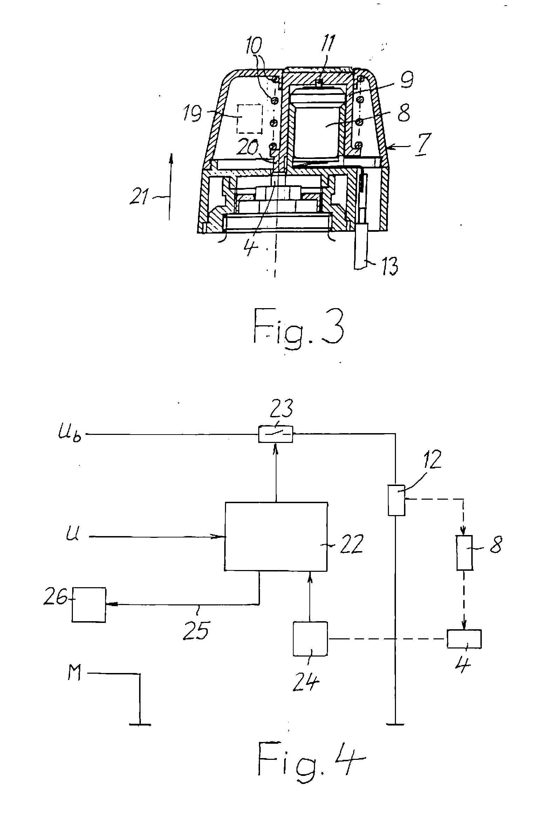

Die Anordnung nach den Fig. 2 und 3 hat als Stellelement ein temperaturabhängiges Bauteil, das als mit einem speziellen Material gefüllter, mit einem Arbeitskolben ausgerüsteter Dehnkörper ausgeführt ist, wie er beispielsweise aus der DE 31 40 472 C1 beschrieben ist. Das Stellelement kann als temperaturabhängiges Bauteil beispielsweise auch aus einer Formgedächtnislegierung bestehen, wie es beispielsweise aus der WO 2007/036285 A1 hervorgeht. Ein solches Bauteil kann zu seiner Erwärmung direkt an eine Stromquelle angeschlossen werden. Es kann an demselben aber auch ein elektrisches Heizelement angebracht sein. Auch ein Elektromotor kann als Stellelement eingesetzt werden. In der folgenden Beschreibung wird als Stellelement ein temperaturabhängiger Dehnkörper berücksichtigt, stellvertretend auch für alle anderen möglichen Ausführungsformen des Stellelements.

Die Ausführung der Sensorik zur Erfassung des Weges des Stößels des Ventils ist grundsätzlich beliebig. So ist beispielsweise induktiv oder kapazitiv arbeitende Sensoreinheiten einsetzbar. Es können auch Fotostrecken oder mittels Magneten arbeitende Sensoreinheiten verwendet werden, ebenso wie eine Einrichtung mit einem CCD-Array (Charged Coppled Device), wie sie in der EP 1 837 728 B1 beschrieben ist.

Die Anordnung nach der Erfindung wird im Folgenden für den Einsatz in einer Warmwasserheizungsanlage beschrieben, ohne daß dadurch eine Beschränkung auf dieses Einsatzgebiet erfolgt.

In Fig. 1 ist ein Abschnitt einer Rohrleitung 1 zur Führung von Heizungswasser dargestellt, in deren Verlauf ein Ventil 2 eingebaut ist. Die auf das Ventil 2 aufgesetzte Anordnung 3 zur Betätigung des Stößels 4 desselben ist in Fig. 1 nur schematisch wiedergegeben. Ein genauerer Aufbau der Anordnung 3 und ihr Zusammenwirken mit dem Ventil 2 gehen aus den Fig. 2 und 3 hervor.

Das Ventil 2 hat gemäß Fig. 2 einen Stößel 4, der unter der Wirkung einer der Einfachheit halber nicht mit dargestellten Ventilfeder steht und in Richtung des Doppelpfeiles 5 verstellbar ist. Das Gehäuse des Ventils 2 ist beispielsweise mit einem Gewinde ausgerüstet, auf welches ein Halter 6 aufgeschraubt werden kann. Der beispielsweise aus Kunststoff bestehende Halter 6 dient zur Festlegung eines Gehäuses 7 der Anordnung 3 am Ventil 2.

Die Anordnung 3 selbst besteht - ohne Gehäuse 7 und Halter 6 - aus einem temperaturabhängigen Dehnkörper 8, einem denselben umgebenden, topfartigen Käfig 9 und einer Druckfeder 10, die eine gegenüber der Ventilfeder des Ventils 2 größere Federkraft hat. Der Dehnkörper 8 hat einen Arbeitskolben 11. Am Dehnkörper 8 ist außerdem ein beliebig aufgebauter elektrischer Heizwiderstand 12 angebracht, der über eine elektrische Leitung 13 und den elektrischen Kontakt 14 an eine Spannungsquelle anschließbar ist. Der Heizwiderstand 12 ist mit Vorteil ein PTC-Widerstand.

Das Gehäuse 7 ist in Montageposition mit dem Halter 6 zu einer Einheit verbunden. Alle Teile der Anordnung 3 sind in dem vorzugsweise aus Kunststoff bestehenden Gehäuse 7 angebracht. Im Gehäuse 7 befindet sich eine zylindrische, rohrförmige Aufnahme 15, in welcher der Dehnkörper 8 angeordnet ist. Er liegt mit einer umlaufenden Erweiterung 16 im Stirnbereich der Aufnahme 15 an derselben an und ist dadurch in Richtung des Kontaktes 14 unverrückbar festgelegt.

Der topfförmige Käfig 9 umgibt den Dehnkörper 8 und dessen Aufnahme 15. Die Druckfeder 10 umgibt den Käfig 9. Sie ist vorzugsweise als Schraubenfeder ausgebildet. Mit ihrem einen Ende liegt die Druckfeder 10 an einem Flansch 17 des Käfigs 9 an. Sie ist am anderen Ende am Gehäuse 7 abgestützt. Der Käfig 9 gleitet bei einer durch den Arbeitskolben 11 des Dehnkörpers 8 einerseits und die Druckfeder 10 andererseits verursachten Bewegung in einem Ansatz 18 des Gehäuses 7.

Innerhalb des Gehäuses 7 ist außerdem eine durch eine gestrichelte Linie umrandete Einheit 19 eingezeichnet, welche eine Sensorik zur Erfassung der Position des Stößels 4 des Ventils 2 enthält. Die Sensorik ist mit einem Prozessor verbunden, dessen Arbeitsweise und Funktion anhand von Fig. 4 erläutert werden. Die mögliche Ausführung der Sensorik ist bereits erwähnt.

Die Anordnung nach der Erfindung arbeitet - zunächst ohne Berücksichtigung des Prozessors - beispielsweise wie folgt:

Nach Festlegung der Anordnung 3 am Ventil 2 ergibt sich ein aus Fig. 3 ersichtlicher Aufbau. Das Ventil 2 ist dabei geschlossen. Es wird durch einen Ansatz 20 des Käfigs 9 in dieser Position gehalten, welcher an der Stirnseite des Stößels 4 anliegt. Wenn das Ventil 2 geöffnet werden soll, wird der Stromkreis des Heizwiderstandes 12 geschlossen. Der Heizwiderstand 12 ist dann an die Spannungsquelle angeschlossen und wird erwärmt. Die damit verbundene Erwärmung des Dehnkörpers 8 führt zu einer Bewegung des Arbeitskolbens 11, und zwar in Richtung des Pfeiles 21. Bei seiner Bewegung nimmt der Arbeitskolben 11 den Käfig 9 und dessen Ansatz 20 mit,
wodurch die Druckfeder 10 zusammengedrückt und der Stößel 4 des Ventils 2 entlastet werden. Der Stößel 4 wird unter der Wirkung seiner Rückstellfeder ebenfalls in Richtung des Pfeiles 21 bewegt. Das Ventil 2 wird dadurch geöffnet, so daß Heizungswasser durch die Rohrleitung 1 fließen kann.

Der Stößel 4 des Ventils 2 braucht zwischen dessen Schließstellung und seiner Offenstellung nur um eine kurze Strecke von beispielsweise maximal 4 mm bewegt zu werden. Dieser Hubweg wird von dem Stellelement 8 durch das Zusammenwirken mit der Druckfeder 10 und Heizwiderstand 12 in beiden Richtungen gleichförmig bzw. kontinuierlich zurückgelegt.

Zur Anordnung gehört entsprechend den vorangehenden Ausführungen ein aus Fig. 4 ersichtlicher Prozessor 22, der mit der Sensorik der Anordnung verbunden ist. Die Sensorik liefert als Sensorsignale von der Position des Stößels 4 des Ventils 2 abhängige elektrische Spannungswerte an den Prozessor 22. Nach Maßgabe der Sensorsignale wird vom Prozessor 22 eine zwischen einer Schließstellung des Ventils 2 entsprechenden minimalen Spannung und einer einem vorgegebenen, maximalen Hub des Stößels 4 des Ventils 2 entsprechenden maximalen Spannung liegende Regelkennlinie gebildet und im Prozessor 22 gespeichert.

Die zwischen 0 und 100 % einstellbaren Spannungswerte, welche den im Vorangehenden erwähnten 0-10 V-Signalen entsprechen, werden durch den Prozessor 22 den Spannungswerten der in demselben gespeicherten Regelkennlinie proportional zugeordnet. Wenn beispielsweise das Ventil 2 voll geöffnet sein soll, damit die maximal mögliche Durchflußmenge eines Mediums fließen kann, dann wird dem Prozessor 22 die maximale Steuerspannung von 10 V zugeführt, welche der maximalen Spannung der Regelkennlinie entspricht. Soll nur die Hälfte der maximal möglichen Durchflußmenge fließen, dann beträgt die Steuerspannung nur 50 % ihres Maximalwerts. Das gilt analog fürjeden anderen prozentualen Wert von Steuerspannung und Durchflußmenge.

In Fig. 4 ist eine Schaltungsanordnung zur Kontrolle der Position des Stößels 4 des Ventils 4 in sehr einfacher Ausführung dargestellt. Es sind nur die für das Verständnis der Erfindung erforderlichen Bauteile eingezeichnet.

Das elektrische Heizelement 12 ist über ein Schaltelement 23 zwischen einer Betriebsspannung U_{b} und einem Bezugspotential M angeschlossen, bei dem es sich mit Vorteil um Masse oder Erdpotential handelt. Das Schaltelement 23 ist mit Vorteil ein elektronisch steuerbares Schaltelement, wie beispielsweise ein Relais, ein Transistor oder ein Optokoppler. Der Prozessor 22 kann ebenfalls an die Betriebsspannung U_{b} angeschlossen sein. Er kann aber entsprechend Fig. 4 auch mit einer anderen Spannungsquelle U verbunden sein.

Am Stößel 4 des Ventils 2 ist eine Sensorik 24 angebracht, die elektrisch leitend mit dem Prozessor 22 verbunden ist. Der Prozessor 22 ist außerdem über eine als Rückkanal 25 bezeichnete elektrische Leitung mit einer Überwachungseinheit 26 verbunden, die beispielsweise und mit Vorteil in einer Gebäudeleittechnik angebracht ist.

Beim Betrieb der Anordnung nach den Fig. 1 bis 4 wird beispielsweise von der Gebäudeleittechnik ein Signal an den Prozessor 22 gegeben, der daraufhin aktiviert ist. Er betätigt das Schaltelement 23, durch welches das Heizelement 12 eingeschaltet und auch wieder ausgeschaltet wird. Der Dehnstoffkörper des Stellelements 8 wird dadurch mehr oder weniger stark erwärmt, in Abhängigkeit von der gewünschten Durchflußmenge des Heizmediums, das durch die Rohrleitung 1 fließt.

Die Position des Stößels 4 wird auf diese Weise entsprechend der Regelkennlinie des Prozessors 22 von diesem eingestellt. Sie wird von der Sensorik 24 kontrolliert, die entsprechende Sensorsignale als Spannungswerte an den Prozessor 22 liefert. Wenn das Sensorsignal einer Stellung des Stößels 4 entspricht, die mit dem vom Prozessor 22 ausgegebenen Signal übereinstimmt, arbeitet die Anordnung störungsfrei.

Wenn das Stellelement 8 aufgrund von Signalen des Prozessors nicht mehr reagiert, bleibt der Stößel 4 in der gerade vorliegenden Position stehen. Es kann auch geschehen, daß der Stößel 4 sich aufgrund einer mechanischen Beschädigung nicht mehr bewegt. In beiden Fällen bleibt das an den Prozessor 22 gegebene Sensorsignal unverändert, auch wenn der Prozessor 22 weiterhin Signale zur Änderung der Position ausgibt.

Das wird in der Überwachungseinheit 26 erkannt, die über den Rückkanal 25 ständig mit dem Prozessor 22 verbunden ist. Die entsprechende Störung kann dann schnellstens beseitigt werden. Die Überwachungseinheit 26 kann auch mit einem akustischen und/oder optischen Alarmgeber ausgerüstet sein.

## Patentansprüche

1. Anordnung für ein Ventil, das mit einem unter der Wirkung einer Ventilfeder stehenden Stößel ausgerüstet ist, bei welcher ein einen Arbeitskolben aufweisendes Stellelement eingesetzt ist, dessen Arbeitskolben in Arbeitsstellung auf den Stößel des Ventils einwirkt und in Achsrichtung desselben verstellbar ist, bei welcher außerdem ein Prozessor vorhanden ist, in dem eine zur Einstellung der Stellung des Stößels des Ventils dienende Regelkennlinie gespeichert ist, und bei welcher weiterhin eine die Stellung des Stößels erkennende Sensorik eingesetzt ist, welche ein der jeweiligen Stellung des Stößels entsprechendes Sensorsignal an den Prozessor liefert, **dadurch gekennzeichnet, daß** der Prozessor (22) über einen Rückkanal (25) mit einer Überwachungseinheit (26) verbunden ist, welcher vom Prozessor (22) das von der Istposition des Stößels (4) des Ventils (2) abhängige Sensorsignal der Sensorik zugeführt wird.

2. Anordnung nach Anspruch 1, **dadurch gekennzeichnet, daß** der Rückkanal (25) eine elektrische Leitung ist.

3. Anordnung nach Anspruch 1 oder 2, **dadurch gekennzeichnet, daß** die Überwachungseinheit mit einem akustischen und/oder optischen Alarmgeber gekoppelt ist.
